# EUROPÄISCHE PATENTSCHRIFT

(11) **EP 0 598 085 B1**
(45) Veröffentlichungstag und Bekanntmachung des Hinweises auf die Patenterteilung: **23.07.1997**
(21) Anmeldenummer: 93912783.3
(22) Anmeldetag: 25.05.1993
(51) Int. Cl.: D05C 17/02

(54) **TUFTINGTEPPICH UND VERFAHREN ZU SEINER HERSTELLUNG**
TUFTED CARPET AND PROCESS FOR MANUFACTURING THE SAME
TAPIS TUFT ET SON PROCEDE DE FABRICATION

(30) Priorität: 26.05.1992 DE 4217439; 26.05.1992 DE 4217440; 26.05.1992 DE 4217442
(43) Veröffentlichungstag der Anmeldung: 25.05.1994
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.
(86) Internationale Anmeldenummer: EP9301309
(87) Internationale Veröffentlichungsnummer: WO9324698

(56) Entgegenhaltungen:
- EP-A- 0 018 789
- DE-A- 1 435 762
- DE-A- 1 685 110
- FR-A- 1 560 458
- GB-A- 1 437 179
- US-A- 3 952 126
- US-A- 4 705 706

## Beschreibung

Die Erfindung betrifft einen Tuftingteppich gemäß dem Oberbegriff des Hauptanspruches und ein Verfahren zu seiner Herstellung.

Tuftingteppiche weisen einen Tuftingträger und in diesen eingetuftete Tuftingfäden auf, welche auf der Rückseite des Tuftingträgers Schlingen bilden. Bei einem fertigen Teppich werden die Schlingen entweder in dieser Form gelassen oder sie werden aufgeschnitten, so daß sie den Teppichflor bilden. Die Tuftingfäden werden in den Tuftingträger relativ locker eingetuftet und verlaufen abschnittsweise parallel zu der Ebene des Tuftingträgers. Damit die Tuftingfäden in dem Träger gehalten werden und sich aus diesem nicht herausziehen, muß ein solcher Teppich mit Latex behandelt werden. Latexbeschichtungsanlagen sind sehr teuer, insbesondere schließt sich der eigentlichen Latexbeschichtung ein aufwendiger Trocknungsprozeß an. Derartige Latexbeschichtungsanlagen erfordern Räume in der Größe von 8 m x 40 m. Bei einem Trocknungsprozeß entstehen große Abwasser- und Abluftprobleme. In manchen Fällen wird sogar der Vorgang des Eintuftens und die Beschichtung mit Latex entkoppelt, d.h. die getufteten Zwischenprodukte werden zu einer speziellen Beschichtungsanlage an einen anderen Ort gebracht. Dies alles ist nachteilig und verteuert nicht nur den Herstellungsprozeß von derartigen Teppichen, sondern auch durch den Latex deren Entsorgung.

Aus der US PS 4705 706 ist ein Tuftingteppich bekannt. Um die Tuftingfäden in dem Tuftingträger fest zu verankern, sind drei Trägerschichten vorgesehen, durch die die Fäden durchgezogen werden. Die feste Verbindung der eingetufteten Fäden mit dem Träger wird durch Erwärmen während des Herstellungsprozeßes erreicht. Das Vorhandensein von mehreren Tuftingschichten verhindert auch das Zerstören des empfindlichen Teppichmaterials durch die Hitzeeinwirkung während des Herstellungsvorgangs.

Aufgabe der vorliegenden Erfindung ist es, einen gattungsgemäßen Tuftingteppich so auszugestalten, daß bei seiner Herstellung kein Latex mehr notwendig ist. Das Verfahren zur Herstellung eines solchen Teppiches soll preisgünstig und einfach sein.

Diese Aufgabe ist durch die im Hauptanspruch angegebene Erfindung gelöst. Das Verfahren zur Herstellung eines derartigen Teppiches ist in den Ansprüchen 10 bis 14 angegeben.

Bei dem erfindungsgemäßen Tuftingteppich besteht der Tuftingträger aus mit einer Trägerschicht mittels Fasern vernadeltem, stückigem folienartigen räumlich ausgebildetem Kunststoffmaterial. Die Tuftingfäden sind in den Tuftingträger eingetuftet und darin fest eingebunden. Die Tuftingfäden sind mit dem Tuftingträger so fest verbunden, daß die Zugabe von Latex nicht mehr notwendig ist und die Fäden ziehen sich aus dem fertigen Teppich nicht heraus. Das folienartige Kunststoffmaterial liegt in Streifenform vor. Besonders vorteilhaft ist es, wenn die Vernadelung eines solchen Tuftingträgers in relativ großen Abständen stattfindet, so daß nur ein relativ lockeres Gebilde vorliegt. Durch das anschließende Eintuften von Tuftingfäden unter einem entsprechenden Zug ziehen sich diese in denTuftingträger hinein, so daß sie längs ihrer, zu der Ebene des Tuftingträgers parallel verlaufenden Abschnitte bereits durch das Folienmaterial teilweise umschlossen sind. Wird der Zug auf die Tuftingfaden beim Eintuften in den Tuftingträger kleiner gewählt, so bleiben die Tuftingfäden auf ihren zum Tuftingträger parallel verlaufenden Abschnitten auf der Oberfläche desselben liegen. Durch die Verdichtung des zunächst locker mit der Trägerschicht vernadelten Kunststoffolienmaterials werden die zunächst etwa senkrecht eingetufteten Fäden so umgebogen, daß sie in dem Folienmaterial fest verankert sind. Darüberhinaus werden die Tuftingfaden längs ihrer parallel zur Ebene des Tuftingträgers verlaufenden Abschnitte durch die Verdichtung und / oder teilweises Schmelzen des Folienmaterials (entweder durch den während des Tuftingprozeßes ausgeübten Druck oder durch zusätzlichen Druck- und Temperatureinfluß) durch das Folienmaterial fest umschlossen, derart daß dadurch die Einbindung der Fäden in dem Träger noch stärker ist.

Vorteilhaft ist, wenn das stückige Folienmaterial uneben ist und aus thermoplastischem Kunststoff besteht. Dadurch kann der zunächst lockere Tuftingträger durch Druck- und Temperatureinfluß, vorzugsweise durch Erwärmung über die Schmelztemperatur des Kunststoffmaterials hinaus, so verdichtet werden, daß die Tuftingfäden in dem Kunststoffmaterial "miteingeschmolzen" vorliegen. Das unebene Folienmaterial hat den Vorteil, daß durch eine lockere Aufschichtung des Materials auf einer Trägerschicht das Eintuften von Fäden einfacher ist, als durch einen ebenen, dichten Träger. Außerdem ist beim Vorliegen eines unebenen, ein hohes Schüttvolumen aufweisenden Folienmaterials, die Herstellung des Tuftingträgers besonders einfach. Das verwendete Folienmaterial kann derart volumenvergrößert sein, daß es dreidimensional verformt vorliegt. Es können in an sich flachen Folien eine Vielzahl von über die Fläche verteilten Stellen so gereckt sein, daß Erhebungen entstehen. Vorteihaft ist es aber auch, daß bereits uneben vorliegende Streifen oder Stücke aus folienartigem Kunststoffmaterial miteingearbeitet werden können. Der erfindungsgemäße Tuftingträger bietet eine hervorragende Möglichkeit zur Verarbeitung von anfallenden Kunststoffabfallfolien. Da solche Folien in dem Tuftingträger zunächst durch Vernadelung miteinander und mit der Trägerschicht verbunden werden und anschließend durch Eintuften von Fäden und Verdichtung des Folienmaterials durch anschließendes Walzen oder Pressen, meistens bei erhöhter Temperatur verarbeitet werden, spielt deren unterschiedliches Verhalten, aufgrund von z.B. verschiedenen eingesetzten Materialien keine wesentliche Rolle. Deshalb können auch verschiedenartige Kunststoffabfallfolien miteinander vermischt werden, meist ohne daß dadurch die Eigenschaften des hergestellten Tuftingteppichs nachhaltig beeinträchtigt werden. Wesentlich ist auch bei der Herstellung des erfindungsgemäßen Tuftingteppiches, daß das als Abfall vorliegende Material in seiner bisherigen Ausgestaltung, d.h. z.B. als folienartiger Kunststoffabfall, gleich welcher Form, auch in Stücken von unregelmäßiger Gestalt eingesetzt werden kann.

Den im Tuftingträger eingesetzten Kunststoffstücken können auch Stücke aus alten Bodenbelägen zugegeben werden. Der Zusammenhalt eines solchen Tuftingträgers ist besonders gut. Bei der Herstellung von solchen Tuftingteppichen ist sogar der beim Vernadeln bzw. Eintuften ausgeübte Druck ausreichend, um das Einbinden der Tuftingfäden in der Trägerschicht zu gewährleisten, so daß auf zusätzliche Druck- bzw. Wärmeeinwirkung verzichtet werden kann. Auch brauchen derartige Teppiche nur locker genadelt zu werden, es sind ca. 3 Einstiche pro 1 cm ausreichend.

Die Entsorgung der erfindungsgemäßen Teppiche ist dann besonders einfach, wenn der Tuftingträger (Fasern, Folien und die Trägerschicht) aus einem einheitlichen Material besteht.

Das Verfahren zur Herstellung des erfindungsgemäßen Tuftingteppiches ist dadurch gekennzeichnet, daß zunächst ein Tuftingträger hergestellt wird, indem stückiges folienartiges, räumlich ausgebildetes Kunststoffmaterial zu einer einheitlichen Schichtdicke, bevorzugt in mehreren Lagen, locker auf einer Trägerschicht abgelegt, von einer vernadelbaren Deckschicht abgedeckt und die drei Schichten miteinander locker vernadelt werden, und daß in den so entstandenen Tuftingträger Tuftingfäden eingetuftet werden und in diesem fest eingebunden werden. Vorteilhafterweise erfolgt das Einbinden von Tuftingfäden in den Tuftingträger durch einen auf das Eintuften folgenden Warmwalz- bzw. Preßvorgang. Durch den Warmwalz- oder Preßvorgang wird nicht nur eine bessere Verankerung der Tuftingfäden in dem Tuftingträger erreicht, sondern es ist auch möglich, Teppiche unterschiedlicher Steifigkeit und Dicke durch unterschiedlich hohe Verdichtung des folienartigen Materials zu erreichen. Vorteilhaft dabei ist, wenn die Folien auf ihre Schmelztemperatur erwärmt werden, und die Tuftingfäden in dem Träger durch die schmelzenden Folien sehr fest eingebunden werden. Es kann auch vorgesehen sein, daß die Temperatur nur stellenweise auf die Schmelztemperatur des folienartigen Kunststoffmaterials erhöht wird; in diesem Fall wird der Verankerungsvorgang der Tuftingfäden in dem Tuftingträger teilweise durch Schmelzen der Folien, also thermisches Verdichten und teilweise durch mechanisches Verdichten der Folien erreicht. Es ist vorteilhaft, wenn die Wärmeeinwirkung von der Rückseite des Teppiches erfolgt, um eine zu starke Verformung des Flores zu verhindern. Als vorteilhaft haben sich ein Druck von 0,5 kP / cm² und eine Temperatur von 150°C (unten) und 100°C (oben) bei einer Preßzeit von 2 Minuten erwiesen.

Sollte eine besonders hohe Beständigkeit gegen Herausziehen der Fäden aus dem fertigen Teppich erreicht werden, so kann auf die Tragerschicht des Tuftingträgers eine Warmklebemasse gegeben werden, welche bei Erwärmung und Verdichtung des gesamten Produktes für eine zusätzliche Einbindung und Verklebung der Tuftingfäden in dem Teppich sorgt.

Außerdem kann es gemäß einer vorteilhaften Ausgestaltung nach Anspruch 14 vorgesehen sein, daß vor dem Walz- und Preßvorgang ein zweiter, insbesondere thermoplastischer Tuftingrücken auf den Tuftingträger von der Eintuftseite gelegt oder diese Seite mit einer Hot-Meltschicht versehen wird und daß anschließend alle Schichten miteinander verbunden werden. Dadurch werden insbesondere die nicht in den Tuftingträger hineingezogenen und durch die Folienschicht umschlossenen Tuftingfäden durch eine derartige Rückenschicht auch auf ihren zum Träger parallel verlaufende Abschnitten besonders gut gehalten.

Die durch den Walz- bzw. Preßvorgang flachgedrückten, bei Veloursteppichen auch aufgeschnittenen Schlingen konnen anschließendend durch Hochdämpfen, Hochbürsten oder dgl. wieder aufgerichtet werden. Der Prozeß ist besonders geeignet für Produkte mit niedrigem, dichtem Pol oder Flor.

Ein erfindungsgemäßer Tuftingteppich kann in einem kontinuierlichen Produktionsprozeß hergestellt werden. wobei in einer Produktionsanlage die Aufschichtung der Kunststoffolien auf eine Trägerschicht, das Auflegen einer Deckschicht, das Vernadeln der drei Schichten miteinander, das Eintuften der Tuftingfäden und das Warmwalzen bzw. Pressen und anschlißendes Aufrichten der Schlingen erfolgen kann.

Der erfindungsgemäße Tuftingteppich wird anhand von Zeichnungen näher erläutert.

Es zeigen:

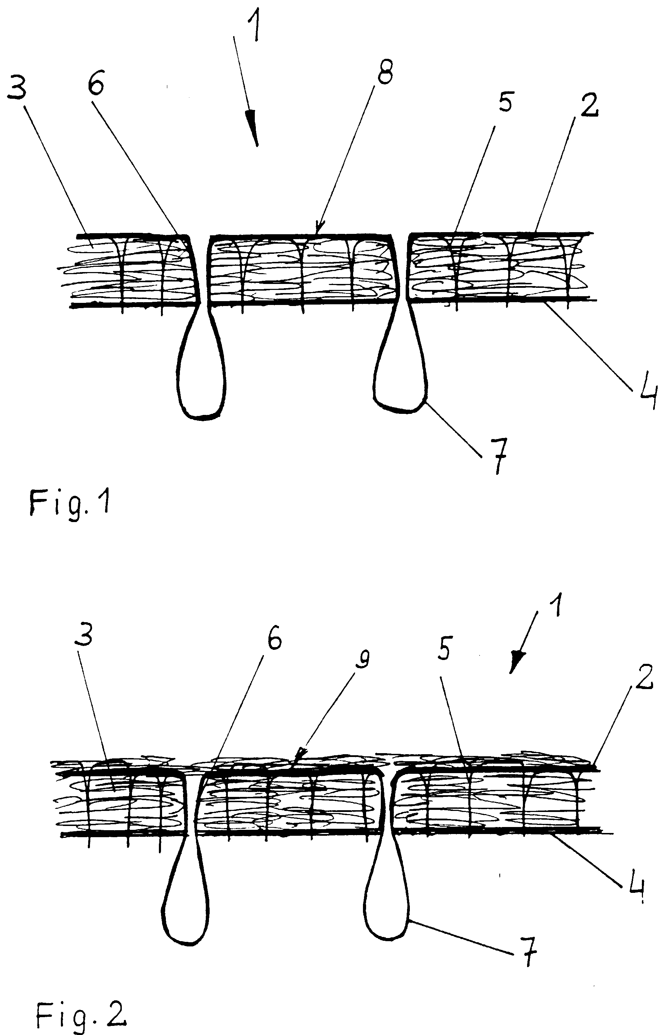

- Fig. 1:: Eine schematische Darstellung eines Tuftingträgers mit eingetufteten Fäden.
- Fig. 2:: Eine schematische Darstellung eines Tuftingträgers mit eingetufteten und eingezogenen Fäden.

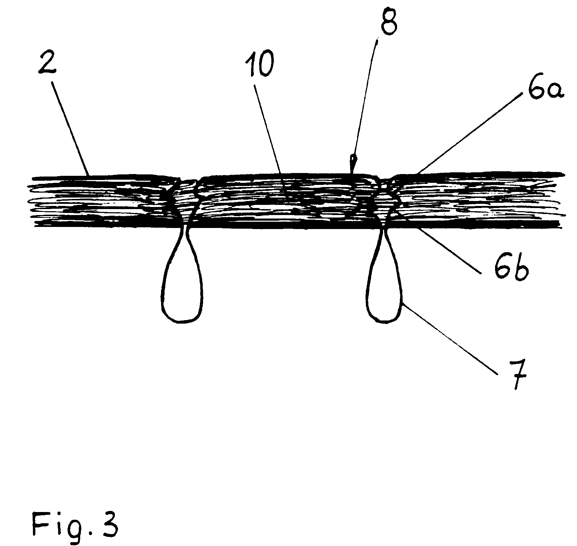

- Fig. 3:: Eine schematische Darstellung des erfindungsgemäßen Tuftingteppiches.

Der enfindungsgemäße Tuftingteppich weist einen Tuftingträger 1 mit eingetufteten Tuftingfäden 2 auf. Der Tuftingträger 1 besteht aus stückigem folienartigen räumlich ausgebildeten Kunststoffmaterial 3, welches mit einer Trägerschicht 4 durch Fasern 5 vernadelt vorliegt. Die Tuftingfäden 2 sind in den Tuftingträger 1 so eingetuftet, daß sie durch den Tuftingträger unter Bildung von Abschnitten 6 verlaufen und rückseitig des Trägers 4 eine Schlaufe 7 bilden. Auf ihren Abschnitten 8 verlaufen die Tuftingfäden 2 parallel zur Ebene des Tuftingträgers 1 und somit der Trägerschicht 4. Auf diesen Abschnitten 9 können die Tuftingfäden zumindest teilweise in das Folienmaterial 3 hineingezogen sein, so daß sie durch dieses zuminaest teilweise umgeben sind. Nach der Verdichtung der Foiien 3 durch einen Warmwalz- oder Preßprozeß sind die Tuftingfäden 2 auf ihren Abschnitten 6 in dem geschmolzenen und verdichteten Folienmaterial 10 fest eingebunden und durch die mechanische Verdichtung desselben auch aus ihrer im wesentlichen senkrechten Verlaufrichtung so umgelenkt, daß sie einen winkligen Verlauf (Abschnitte 6a,6b) aufweisen.

## Patentansprüche

1. Tuftingteppich, insbesondere Teppichboden mit in einem Tuftingträger eingetufteten und mit diesem fest verbundenen Tuftingfäden, **dadurch gekennzeichnet,** daß der Tuftingträger (1) aus mit einer Trägerschicht (4) mittels Fasern (5) vernadeltem, stückigem räumlich ausgebildeten folienartigen thermoplastischen Kunststoffmaterial (3) besteht und die Tuftingfäden (2) in dem Tuftingträger (1) fest eingebunden sind.

2. Tuftingteppich nach Anspruch 1, **dadurch gekennzeichnet**, daß die Tuftingfäden (2) auf ihren, zu der Ebene des Tuftingträgers (1) und der Ebene der Trägerschicht (4) parallelen Abschnitten (9) mindestens teilweise durch das Folienmaterial (3) umschlossen vorliegen.

3. Tuftingteppich nach Anspruch 2, **dadurch gekennzeichnet**, daß das unvemadelte, räumlich ausgebildete folienartige Material (3) ein Schüttvolumen aufweist, welches mindestens eineinhalb, maximal zehnmal so groß ist, wie das Volumen des folienartigen ebenen Materials.

4. Tuftingteppich nach Anspruch 3, **dadurch gekennzeichnet**, daß das räumlich ausgebildete Folienmaterial (3) aus einer Ebene hervorstehende Erhebungen aufweist.

5. Tuftingteppich nach einem der vorangegangenen Ansprüche, **dadurch gekennzeichnet,** daß Kunststoffolienmaterial (3) aus Folienabfällen besteht.

6. Tuftingteppich nach einem der vorangegangenen Ansprüche, **dadurch gekennzeichnet,** daß der Tuftingträger (1 ) mit Fasern (5) aus textilem Material, Polypropylen, Polyamid oder Polyester vernadelt ist.

7. Tuftingteppich nach einem der vorangegangenen Ansprüche, **dadurch gekennzeichnet,** daß die Trägerschicht (4) des Tuftingträgers (1) aus Polypropylengewebe, Jutegewebe, Poiypropylen- oder Polyestervliesstoff besteht.

8. Tuftingteppich nach einem der vorangegangenen Ansprüche, **dadurch gekennzeichnet,** daß dem Folienmaterial (3) Fasern beigemischt sind.

9. Tuftingteppich nach einem der vorangegangenen Ansprüche, **dadurch gekennzeichnet,** daß dem Folienmaterial (3) zerkleinertes, stückiges Material aus alten Bodenbelägen beigemischt ist.

10. Verfahren zur Herstellung eines Tuftingteppichs nach einem der vorangegangenen Ansprüche, **dadurch gekennzeichnet**, daß zunächst ein Tuftingträger (1) dadurch hergestellt wird, daß folienartiges, räumlich ausgebildetes thermoplastisches Kunststoffmaterial (3) zu mindestens einer Lage locker auf einer Trägerschicht (4) abgelegt, und von einer vernadelbaren Deckschicht abgedeckt wird, die drei Schichten mittels der Deckschicht entnommenen Fasern (5) miteinander vernadelt, die Tuftingfäden (2) in den so entstandenen Tuftingträger (1) eingetuftet und in diesem fest eingebunden werden.

11. Verfahren nach Anspruch 9, **dadurch gekennzeichnet,** daß die Einbindung der Tuftingfäden (2) in den Tuftingträger (1) zusätzlich durch einen Warmwalz- oder Preßvorgang vorgenommen wird.

12. Verfahren nach Anspruch 11, **dadurch gekennzeichnet,** daß die Umformtemperatur zumindest stellenweise der Schmelztemperatur des verwendeten Kunststoffolienmaterials (3) entspricht oder höher ist.

13. Verfahren nach einem der Ansprüche 10 bis 12, **dadurch gekennzeichnet,** daß auf die Trägerschicht (4) des Tuftingträgers (1) eine Warmklebemasse gegeben wird.

14. Verfahren nach einem der Ansprüche 10 bis 13, **dadurch gekennzeichnet,** daß auf den Tuftingträger mit eingetufteten Fäden von der Eintuftseite vor dem Walz- oder Preßvorgang ein zweiter Rücken aufgelegt wird.

## Claims

1. Tufted carpet, in particular a floor covering, with tufting threads tufted into a tufting carrier and secured in it, **characterised in that** the tufting carrier (1) comprises pieces of spatially formed film-like thermoplastic synthetic resin material (3) needled to a carrier layer (4) by means of fibres (5) and the tufting threads (2) are firmly bound into the tufting carrier (1).

2. Tufted carpet according to claim 1, **characterised in that** the tufting threads (2) are present at least partially enclosed in the film material (3) on their portions (9) parallel to the plane of the tufting carrier (1) and the plane of the carrier layer (4).

3. Tufted carpet according to claim 2, **characterised in that** the un-needled spatially formed film-like material (3) has a bulk volume which is at least one and a half times and at the most ten times as large as the volume of the film-like flat material.

4. Tufted carpet according to claim 3, **characterised in that** the spatially formed film material (3) has raised portions projecting out of a plane.

5. Tufted carpet according to one of the foregoing claims, **characterised in that** the synthetic resin film material (3) comprises waste film material.

6. Tufted carpet according to one of the foregoing claims, **characterised in that** the tufting carrier (1) is needled using fibres (5) of textile material, polypropylene, polyamide or polyester.

7. Tufted carpet according to one of the foregoing claims, **characterised in that** the carrier layer (4) of the tufting carrier (1) comprises polypropylene fabric, jute fabric, or polypropylene or polyester fleece.

8. Tufted carpet according to one of the foregoing claims, **characterised in that** fibres are mixed in with the film material (3).

9. Tufted carpet according to one of the foregoing claims, **characterised in that** broken down pieces of material from old floor coverings are mixed in with the film material (3).

10. Method of manufacturing a tufted carpet according to one of the foregoing claims, **characterised in that** first a tufting carrier (1) is produced in such a way that film-like spatially formed thermoplastic synthetic resin material (3) is deposited loosely in at least one layer on a carrier layer (4), and is covered over with a covering layer capable of being needled, the three layers are needled together by means of fibres (5) taken from the covering layer, the tufting threads (2) are tufted into the resulting tufting carrier (1) and firmly bound into the latter.

11. Method according to claim 9, **characterised in that** the binding in of the tufting threads (2) into the tufting layer (1) is undertaken additionally by a hot-rolling or pressing process.

12. Method according to claim 11, **characterised in that** the deformation temperature at least locally corresponds to or is higher than the melting temperature of the synthetic resin film material (3) which is used.

13. Method according to one of claims 10 to 12, **characterised in that** a hot-melt adhesive mass is applied to the carrier layer (4) of the tufting carrier (1).

14. Method according to one of claims 10 to 13, **characterised in that** before the rolling or pressing process a second backing is applied to the tufting carrier with tufted-in threads from the tufting-in side.

## Revendications

1. Tapis capitonné, en particulier tapis plein avec des fils de piquage piqués dans un substrat de tapis et solidaire de ce dernier, caractérisé par le fait que le substrat de tapis (1) consiste en un matériau synthétique thermoplastique en morceaux pelliculaire se présentant de forme spatiale, assemblé par piquage, à l'aide de fibres (5), à une couche de substrat (4) et que les fils de piquage (2) sont fermement incorporés dans le substrat de tapis (1).

2. Tapis capitonné suivant la revendication 1, caractérisé par le fait que les fils de piquage (2) se présentent, sur leurs tronçons (9) parallèles au plan du substrat de tapis (1) et au plan de la couche de substrat (4), au moins partiellement entourés par le matériau pelliculaire (3).

3. Tapis capitonné suivant la revendication 2, caractérisé par le fait que le matériau pelliculaire (3) se présentant de forme spatiale non assemblé par piquage présente un volume apparent qui est au moins une fois et demie, au maximum deux fois, aussi grand que le volume du matériau pelliculaire plat.

4. Tapis capitonné suivant la revendication 3, caractérisé par le fait que le matériau pelliculaire (3) se présentant de forme spatiale présente des bosses faisant saillie par rapport à un plan.

5. Tapis capitonné suivant l'une des revendications précédentes, caractérisé par le fait que le matériau pelliculaire synthétique (3) se compose de déchets de films.

6. Tapis capitonné suivant l'une des revendications précédentes, caractérisé par le fait que le substrat de tapis (1) est assemblé par piquage à l'aide de fibres (5) en matière textile, polypropylène, polyamide ou polyester.

7. Tapis capitonné suivant l'une des revendications précédentes, caractérisé par le fait que la couche de substrat (4) du substrat de tapis (1) consiste en un tissu de polypropylène, un tissu de jute, un voile de polypropylène ou de polyester.

8. Tapis capitonné suivant l'une des revendications précédentes, caractérisé par le fait qu'au matériau pelliculaire (3) sont mélangées des fibres.

9. Tapis capitonné suivant l'une des revendications précédentes, caractérisé par le fait qu'au matériau pelliculaire (3) est mélangé du matériau en morceaux broyé composé de revêtements de sol usés.

10. Procédé de fabrication d'un tapis capitonné suivant l'une des revendications précédentes, caractérisé par le fait qu'il est tout d'abord réalisé un substrat de tapis (1) en ce que du matériau synthétique thermoplastique pelliculaire se présentant de forme spatiale (3) est déposé de forme peu serrée en au moins une couche sur une couche de substrat (4) et est recouvert d'une couche de revêtement assemblée par piquage, que les trois couches sont assemblées l'une à l'autre par piquage à l'aide de fibres (5) prélevées de la couche de revêtement, que les fils de piquage (2) sont piqués dans le substrat de tapis (1) ainsi produit et sont fermement incorporés dans ce dernier.

11. Procédé suivant la revendication 9, caractérisé par le fait qu'il est procédé à l'incorporation des fils de piquage (2) dans le substrat de tapis (1) en outre par une opération de laminage à chaud ou de pressage.

12. Procédé suivant la revendication 11, caractérisé par le fait que la température de transformation correspond ou est supérieure, au moins par endroits, à la température de fusion du matériau synthétique pelliculaire (3) utilisé.

13. Procédé suivant l'une des revendications 10 à 12, caractérisé par le fait que sur la couche de substrat (4) est appliquée une colle à chaud.

14. Procédé suivant l'une des revendications 10 à 13, caractérisé par le fait que sur le substrat de tapis à fils piqués est déposé depuis le côté de piquage, avant l'opération de laminage ou de pressage, un second dos.
